# EUROPEAN PATENT APPLICATION

(11) **EP 4 624 304 A1**
(43) Date of publication of application: **01.10.2025**
(21) Application number: 24167257.5
(22) Date of filing: 28.03.2024
(51) Int. Cl.: B62B 3/02, F16M 11/24

(54) **A ROLLER-BASED HEIGHT ADJUSTMENT SYSTEM FOR LEVELLING INSTRUMENTS**

(71) Applicant: Roche Diagnostics International AG, 6343 Rotkreuz (CH)
(72) Inventor: MEYER, Thomas, 6343 Rotkreuz ZG (CH)
(74) Representative: Herren, Barbara

(57) **Abstract**

A roller-based height adjustment system (1) for levelling and repositioning an instrument, which is to be relocated at a desired vertical elevation with respect to a ground reference, comprises a frame (2), for supporting the instrument, and mounted wheel assembly (3). The wheel assembly (3) further comprises a rotary shaft (5) with threaded end portions (6A, 6B), lead screw nuts (7 A, B), swing levers (8), rods (9) and wheels (10). The roller-based height adjustment system (1) allows to relocate an instrument at a desired vertical elevation, where an instrument can be a subunit of a bigger interconnected instrument system. The roller-based height adjustment system (1) facilitates height adjustment of each of the subunits, such that they are aligned in relation to one another and can be coupled accurately. Furthermore, the roller-based height adjustment system (1) reduced the manual work needed to relocate the subunits of an instrument system.

## Description

### Technical field to which invention relates

The present invention relates to a height adjustment system and more particularly to a roller-based height adjustment system for levelling and relocating instruments.

### Indication of the background art

Various lifting devices are well known in the art. For example, US4219186A discloses a system for allowing a wheeled truck to cooperate with a relatively stationary lift table assembly. The truck is wheeled thereover to its selective engagement position and it is raised using the lift table with a scissor jack linkwork.

### Technical problem

However the current systems do not facilitate relocation and alignment of instruments, rendering the instrument alignment cumbersome. An instrument can be a subunit of a bigger instrument system, where several instruments are interconnected. To assemble an instrument system comprising multiple subunits, it is necessary to adjust the height of each of the subunits such that they are aligned in relation to one another and can be coupled accurately. The common practice is to position each of the subunits using manual labour and once the subunit is positioned, its height is adjusted using four supportive feet attached to the frame of the subunit. The conventional method for positioning and aligning the subunits typically requires effort of multiple people due to the size and weight of the subunits of an instrument system and involves multiple readjustment steps.

In the following, when referring to positioning of the instrument, it implies the positioning of the instrument in the x-y-plane parallel to the floor. When referring to height adjustment, adjustment or "to adjust", it implies the levelling of the instrument in the z-direction perpendicular to the floor.

### Disclosure of the invention

The objective of the present invention is to provide a roller-based height adjustment system that allows to relocate a mounted instrument directly at the desired height and facilitate assembling of instrument systems. In accordance with the present invention the roller-based height adjustment system comprises a frame and a wheel assembly. The frame supports the instrument and allows coupling it to the wheel assembly. The wheel assembly is mounted to the frame. The wheel assembly further comprises a rotary shaft, lead screw nuts, swing levers, rods and wheels. The rotary shaft has threaded end portions and is mounted to the frame. The lead screw nuts are mounted to the threaded ends of the rotary shaft. The rotary motion of the rotary shaft is converted to a linear back and forth motion of the lead screw nuts. The swing levers are mounted to the lead screw nuts at their lower end portions. The back and forth motion of the lead screw nuts pivots the coupled swing levers. The rods are mounted to the upper part of the swing levers. The pivotal movement of the swing levers rotate the rods clockwise and counterclockwise. The wheels are coupled to the rods. The rotary motion of the rods result in a linear up and down motion of the wheels.

The simultaneous height adjustment of all of the wheels makes the roller-based height adjustment system more robust and levels the coupled instrument equally on all of the sides. Furthermore, the roller-based height adjustment system enables the relocation and alignment of the heavy and large instrument system subunits by a single person.

According to an embodiment of the present invention, the wheel assembly of the roller-based height adjustment system is mounted to the frame directly. For example, using fasteners (e.g. screws, bolts), welding or other direct mounting solutions.

According to an alternative embodiment of the present invention, the wheel assembly is mounted to the frame using cantilevers. The cantilevers increase stability, provide additional support and allow optimising the use of space.

According to a further alternative embodiment the wheel assembly is integrated into the frame, such that the stem of the wheel is directly integrated into the vertical posts of the frame. The protrusion of the cam is coupled to the stem of the wheel, such that the rotary motion of the cam is transferred to an up and down motion of the wheel.

According to an embodiment of the present invention, the wheels, of the wheel assembly, are castors. The castors provide increased mobility to the roller-based height adjustment system, enabling movement of the instrument at a desired vertical elevation in all directions. This is especially beneficial to align and couple instruments in an industrial environment or a laboratory setting.

According to a further aspect of the present invention, the wheels may have a mounted brake, such that when the brake is deployed, the wheel is immobilised and unable to rotate. In some use cases it can be desired to retain the wheels on the ground and to have the possibility to fix the position of the roller-based height adjustment system using a brake on the wheels.

According to another aspect of the present invention, the said frame may further comprise supportive feet at the bottom side of each of the corners of the frame. Once the instrument has been positioned at the desired location using the wheel assembly, the supportive feet can be adjusted and fixed and the wheels can be pulled up.

According to an embodiment of the present invention, the rotary shaft is rotatably mounted to the lower part of the said frame using slide bushings. The rotary shaft is mounted at its central part and at its end portions. Alternative to the slide bushings, various types of bearings are possible, such as ball bearings, pivot bearings, roller bearings, tapered roller bearings, needle bearings, thrust bearings, sleeve bearings and others.

According to an embodiment of the present invention, the rotary shaft of the roller based height adjustment system is a drive shaft. The drive shafts allow for higher precision and durability.

According to an embodiment of the present invention, one of the end portions of the rotary shaft comprises an exposed socket for insertion of a complementary actuator. Various actuators can be used, such as a hex key (an Allan key), a cordless screwdriver or a crank. As an example, when using the hex key as the actuator, the rotational turn of the hex key drives the rotation of the rotary shaft, resulting in the linear up and down motion of the wheels and the height adjustment of the mounted instrument. Alternatively or additionally, a small motor could be used as the actuator. The motor can be directly mounted to the shaft or via a gear.

According to an embodiment of the present invention, the components of the wheel assembly are mounted with a mirror symmetry, such that the plane of symmetry is perpendicular to the rotary shaft and centred at the middle of the rotary shaft. In such an arrangement the threads of the rotary shaft are a left-hand thread and a right-hand thread. The mounted lead screw nuts are, accordingly, a left-hand nut and a right-hand nut. The two swing levers are mounted such that they pivot in opposite directions. The two rods are rotating in opposite directions. The four wheels are simultaneously moved in the linear up and down motion by the rotary motion of the rods. The mirror symmetry of the components allows an equal distribution of the forces.

The rods used for transmitting the torque can possess various geometries. As an example, circular rods, triangular rods and square shaped rods are few of the options. According to an embodiment of the present invention, the wheel assembly comprises rods that are square shaped rods. The swing levers, which are mounted to the central part of the rods, can have a more secure grip, ensuring more stability and robustness.

According to an embodiment of the present invention, the roller-based height adjustment system further comprises cams. The cams are mounted at the tips of the rods. In particular, there is one cam mounted at each of the tips of each of the rods. Each of the cams has a sliding contact with a stem of the coupled wheel. The sliding contact facilitates transmission of the rotary motion of the rods and the coupled cams to the height adjustment of the wheels. This embodiment provides a compact and cost effective solution. Furthermore, it prevents twisting of the wheel stem, further improving the stability of the roller-based height adjustment system.

According to an alternative embodiment of the present invention, the roller-based height adjustment system, further comprises cylindrical gears, which are mounted at the tips of the rods. In particular, there is one cylindrical gear mounted at each of the tips of each of the rods. Each of the gears is coupled to the wheels via a toothed bar as the stem, such that the cylindrical gear meshes with the toothed bar. Various types of gears could be used, for example, spur gear coupled with a cog rail.

There can be multiple ways for mounting the cams or cylindrical gears to the rods, such as using fasteners (e.g. screws), wedge connection, welding, glueing and others.

According to an embodiment of the present invention, the threaded end portions of the rotary shaft, comprised by the roller-based height adjustment system, are self-locking threads.

According to an embodiment of the present invention, the said frame of the roller-based height adjustment system is connected to an object with a fixing device. The fixing can be realised with fasteners (e.g. screws, bolts and nuts), clamps, interlocking mechanisms and other fixing devices. According to a further embodiment of the present invention, the said object is a subunit of an instrument system.

According to an embodiment of the present invention the roller-based height adjustment system is used for levelling and repositioning at least one instrument in a laboratory setting.

Further benefits and advantages of the present invention will become apparent in the following detailed description with appropriate references to the accompanying drawings.

### Brief description of drawings

The invention will now be described by way of example with reference to the accompanying drawings, throughout which like parts are referred to by like references:
Fig. 1A is a perspective view of the roller-based height adjustment system in accordance with an embodiment of the present invention.
Fig. 1B is a perspective view of the wheel assembly of the roller-based height adjustment system in accordance with an embodiment of the present invention.
Fig. 1C is a perspective view of the roller-based height adjustment system in accordance with an alternative embodiment of the present invention.
Fig. 2 is a top view of the roller-based height adjustment system as shown in Fig.1A, additionally demonstrating insertion of the hex key as an actuator.
Fig. 3A is a cross-section taken through AA of Fig.2 in accordance with an embodiment of the present invention as shown in Fig.1A.
Fig. 3B is a cross-section taken through analogous view AA of Fig.2 in accordance with an alternative embodiment of the present invention.
Fig. 4 is a cross-section taken through BB of Fig. 2 in accordance with an embodiment of the present invention as shown in Fig.1A.
Fig. 5A is a cut drawing of a perspective view of the roller-based height adjustment system in accordance with an alternative embodiment of the present invention.
Fig. 5B is a cross-section of the alternative embodiments taken through analogous view AA of Fig. 2.

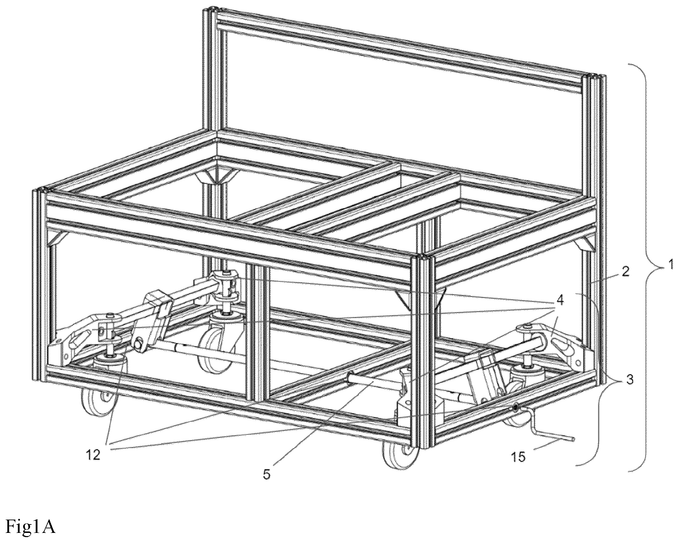

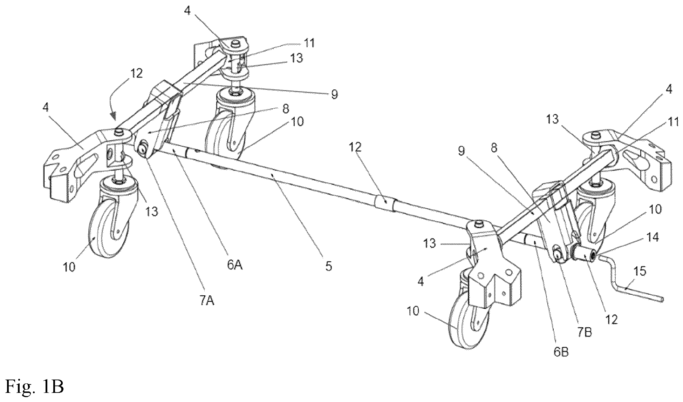

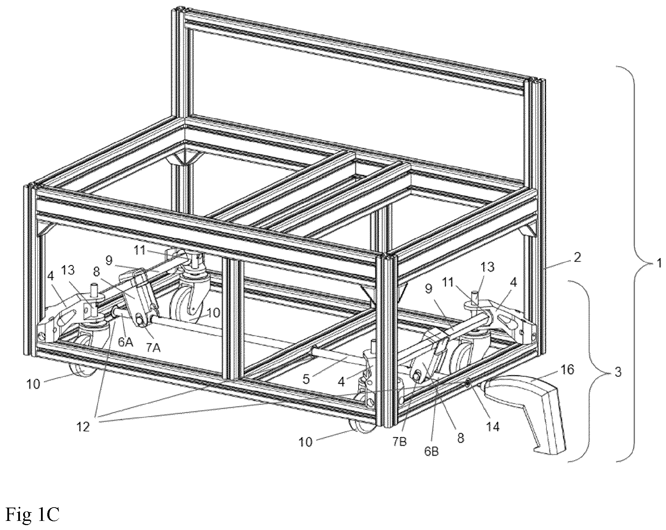

The Fig. 1A illustrates the roller-based height adjustment system 1 for levelling and repositioning an instrument in accordance with an embodiment of the present invention. The roller-based height adjustment system 1 comprises an aluminium cuboid-like shaped frame 2 and a wheel assembly 3. The shape and material of the frame are chosen to ensure optimal support of the mounted instrument. In the embodiment shown in Fig. 1 the frame is assembled using standard aluminium profiles. Other options alternative to aluminium profiles are possible, e.g. welded steel parts, or glued plastic parts or reinforced plastic parts or combinations thereof.

Cantilevers 4 are used to couple the wheel assembly 2 to the frame 1. Additionally, the cantilevers stabilise the bottom of the frame 1 and consequently the mounted instrument. The drive shaft 5 of the wheel assembly 2 is rotatably mounted to the base part of the frame 1. The base part of the frame 1 is constructed with four aluminium profiles fixed at four vertical corner aluminium profiles setting up a rectangle. An intermediate aluminium profile connects the two longer profiles of the rectangle in a middle region of the rectangle. The drive shaft 5 is rotatably fixed in the shorter aluminium profiles of the rectangle and feed through the intermediate aluminium profile.

The Fig. 1B shows the wheel assembly of the embodiment of Fig.1A in more detail. The wheel assembly comprises a drive shaft 5 with threaded ends 6A, 6B, two lead screw nuts 7A, 7B, two swing levers 8, two square shaped rods 9 with welded cams 11 and four castors 10. The components of the wheel assembly 3 are mounted with a mirror symmetry to ensure equal distribution of the forces. Additionally, the figure shows the hex key 15 as an actuator to drive the rotation of the rotary shaft 5 and its complementary socket 14 within the drive shaft 5.

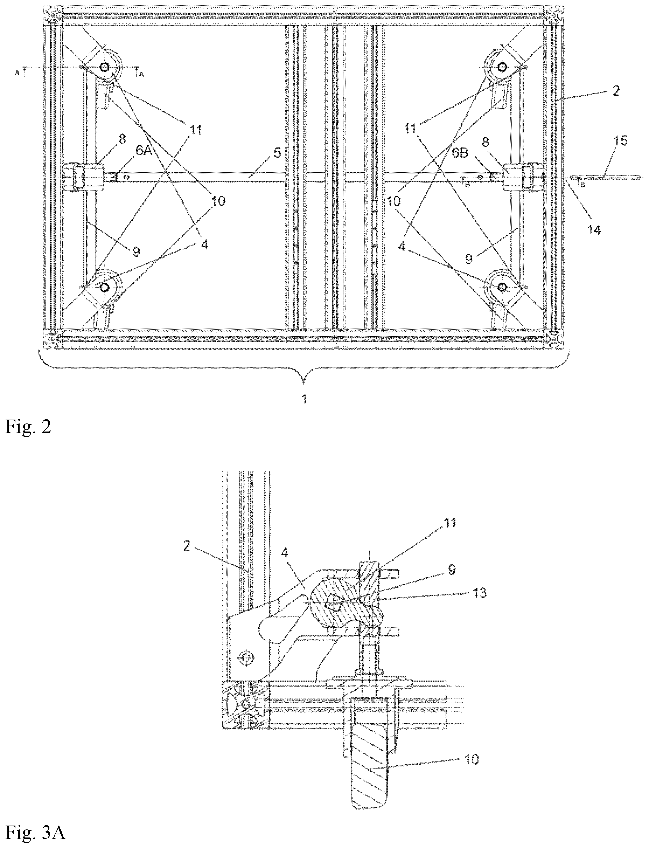

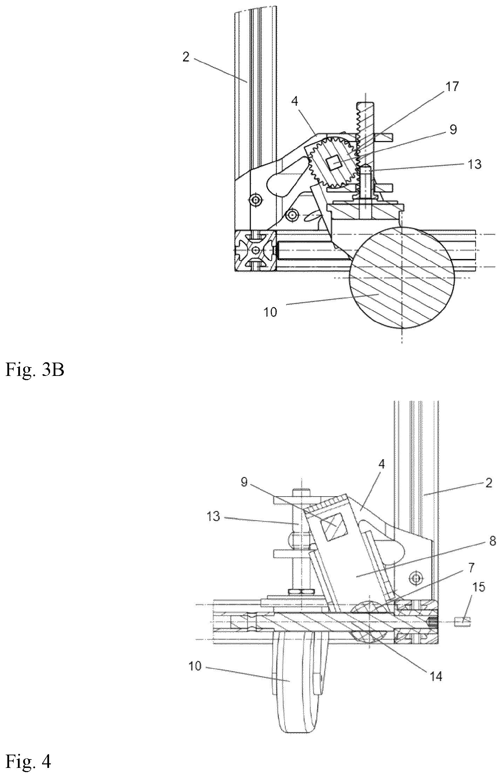

The drive shaft 5 is rotably fixed to the base part of the frame 1 with slide bushings 12. The slide bushings 12 are used to reduce the friction at the mount segments. The drive shaft 5 features self-locking threaded ends 6A, 6B that preserve mirror symmetry, with one end having a left-hand thread 6A and the other a right-hand thread 6B. The threaded end portions of the drive shaft are paired with corresponding lead screw nuts 7- a left-hand lead screw nut 7A and a right-hand lead screw nut 7B. The rotary motion of the drive shaft 5 is translated into a lateral movement of the lead screw nuts 7A, 7B. Laterally expanding posts of the lead screw nuts 7A, 7B engage into two parallel open u-like formed recesses of the side walls of the swing levers, so that the motion of the lead screw nuts 7A, 7B shifts the portion of the connected swing levers 8 in the x-y plane back and forth. The opposite portion of the swing levers 8 are mounted to the square shaped rods 9 using form fitting. The swing levers 8 transfer the rotary motion of the drive shaft 5 to the rotary motion of the coupled square shaped rods 9. Cams 11 are mounted at the tips of the rods 9 using form fitting. The square shaped rods 9 are coupled to the castors 10 through the cams 11. The coupling between stem 13 and cam 11 is shown in more detail in Fig. 3. The rotary motion of the square shaped rods 9 drives the linear up and down motion of the castors 10. The castors 10 provide mobility to the roller-based height adjustment system, enabling movement of the instrument in all directions.

Fig. 1C illustrates the roller-based height adjustment system 1 for levelling and repositioning an instrument in accordance with an alternative embodiment of the present invention. The roller-based height adjustment system 1 comprises an aluminium cuboid-like shaped frame 2 and a wheel assembly 3. Cantilevers 4 are used to couple the wheel assembly 2 to the frame 1. The wheel assembly comprises a drive shaft 5 with threaded ends 6A, 6B, two lead screw nuts 7A, 7B, two swing levers 8, two square shaped rods 9 with welded cams 11 and four castors 10. The components of the wheel assembly 3 are mounted with a mirror symmetry to ensure equal distribution of the forces. The figure shows a small motor 16 as an alternative actuator to drive the rotation of the rotary shaft 5 and its complementary socket 14 within the drive shaft 5.

Fig. 2 shows the top view of the roller-based height adjustment system 1. The figure shows the aluminium elements that compose the frame 2. The cantilevers 4 that couple the wheel assembly 3 to the frame 2. Furthermore the figure shows the top view of the elements of the wheel assembly, such as the drive shaft 5 with threaded end portions 6A, 6B, swing levers 8, square shaped rods 9, cams 10 and castors 10. Additionally, the figure shows the hex key 15 and its complementary socket 14 within the drive shaft 5.

Fig. 3A depicts the coupling between the cam 11 and the castor stem 13 of the embodiment of Fig.1A in more detail. The castor stem 13 comprises two parts. The first, lower free part of the castor stem 13 is directly connected to the fork of the castor 10. The castor fork has a flat top part plate. The castor stem 13, above the flat top plate and below the connection to the cam 11, comprises a swivel joint such that the fork and the mounted castor have an increased mobility and the movement is possible in all directions in the x-y plane. The second part of the castor stem 13 serves as a follower and is interconnected with the cam 11 protrusion, such that the rotary motion of the cam 11 is transferred to an up and down motion of the castor stem 13. In the shown embodiment this is realised as a sliding gear. The castor stem 13 is fixed to the cantilever 4 using slide bushings to reduce the friction of the linear up and down motion. Correspondingly, the height adjustment of the castors 10 results in the height adjustment of the roller-based height adjustment system and ultimately of the mounted instrument. The type of coupling between cam 11 and castor stem 13 and the span of the circular path covered by the rotary motion of the cam 11 determines the range of the displacement of the follower 13 and consequently the range of the height adjustment of the system 1. In the embodiment shown in Fig. 3A the span of the circular path covered by the cam 11 protrusion is limited by two parallel plates of the cantilever 4 coupled to the cam 11. A concentric opening in each of the parallel plates hold the castor stem 13.

The elevation range can be expanded with an alternative embodiment shown in Fig 3B, where a cylindrical gear 17 is coupled to a toothed bar (cog rail) as the stem 13 of the castor 10. Also in this embodiment the castor stem 13 comprises two parts. The first, lower free part of the castor stem 13 is directly connected to the wheel receiving fork of the castor 10 . The castor fork has a flat top part plate. The castor stem 13, above the flat top plate and below the connection to the spur gear 17 comprises a swivel joint such that the fork and the mounted castor have an increased mobility and the movement is possible in all directions in the x-y plane. The second part of the castor stem 13 is a cog rail and meshes with the cylindrical gear 17, such that the rotary motion of the cylindrical gear 17 is transferred to an up and down motion of the cog rail and consequently the castor 10. In this embodiment the elevation range of the roller based height adjustment system 1 depends on the length of the toothed bar of the castor stem 13.

The Fig. 4 depicts the exposed socket 14 of the drive shaft 5, which is intended for the insertion of the complementary hex key 15. The turn of the hex key 15 drives the rotation of the drive shaft and allows the adjustment of the height of the roller-based height adjustment system 1.

The Fig.4 further shows the coupling of the lead screw nut 7 and the swing lever 8. The lateral movement of the lead screw nut 7 shifts the portion of the swing lever 8 connected to the lead screw nut in the x-y plane back and forth. The opposite portion of the swing lever 8 is fixed using form fitting to the square shaped rod 9. The swing lever 8 conveys the lateral motion of the lead screw nut 7 to the rotary motion of the coupled square shaped rods 9.

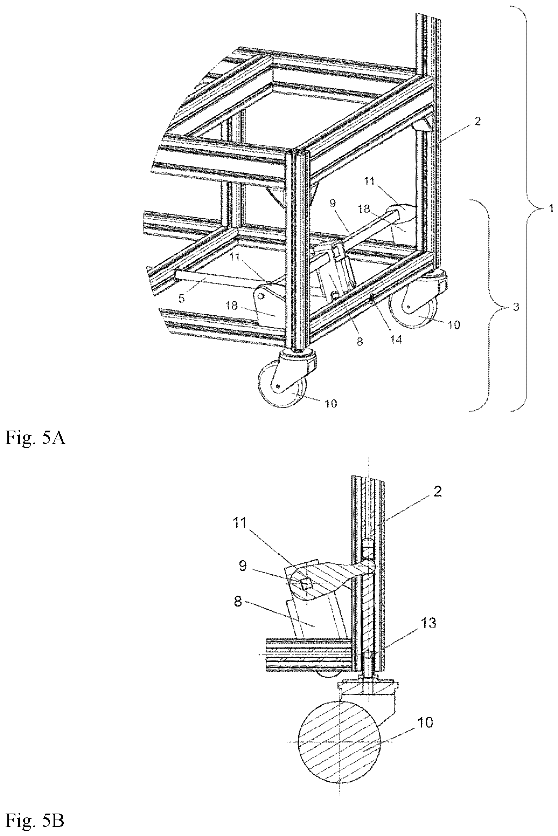

Fig. 5A illustrates an alternative embodiment of the roller-based height adjustment system 1 for levelling and repositioning an instrument in accordance with the present invention. The roller-based height adjustment system 1 comprises an aluminium cuboid-like shaped frame 2 and a wheel assembly 3. Alternative to the embodiment shown in Fig. 1A, the presented embodiment has the wheel assembly 2 integrated into frame 1. The wheel assembly 3 comprises a drive shaft 5 with threaded ends 6A, 6B, two lead screw nuts 7A, 7B, two swing levers 8, two square shaped rods 9 with cams 11 mounted at the end portions of the rods 9 using form fitting and four castors 10. The components of the wheel assembly 3 are mounted with a mirror symmetry to ensure equal distribution of the forces. The castor stem 13 is directly integrated into the vertical aluminium profiles making up the frame (Fig 5B). The cam 11 protrusion is elongated and coupled to the castor stem 13 within the aluminium profile, such that the rotary motion of the cam 11 is transferred to an up and down motion of the castor stem 13 and consequently the castor 10. Aluminium plates 18 coupled to the square shaped rods 9, following the cams 11, further stabilise the coupling of the wheel assembly 2 to the frame 1. Additionally, the figure shows the socket 14 of the drive shaft 5 for coupling with a complementary actuator to drive the rotation of the rotary shaft 5.

Fig. 5B is a cross-section taken through analogous position AA of Fig. 2 for the alternative embodiment shown in Fig. 5A. The Fig. 5B depicts the coupling between the cam 11 and the castor stem 13, which is directly integrated into the vertical aluminium profiles making up the frame 2. The vertical aluminium profiles have a cutout section allowing the coupling of the cam 11 and the castor stem 13. The castor stem 13 comprises two parts. The first, lower free part of the castor stem 13 is directly connected to the fork of the castor 10. The castor fork has a flat top part plate. The castor stem 13, above the flat top plate and below the connection to the cam 11, comprises a swivel joint such that the fork and the mounted castor have an increased mobility and the movement is possible in all directions in the x-y plane. The second part of the castor stem 13 serves as a follower and is coupled with the elongated cam 11 protrusion, such that the rotary motion of the cam 11 is transferred to an up and down motion of the castor stem 13.

The range of the height adjustment of the system 1 depends on the span of the circular path covered by the rotary motion of the cam 11 and the length of the castor stem 13. The span of the circular path is limited to the range where the coupling between cam 11 protrusion and castor stem 13 is maintained. However the minimum elevation of the roller-based height adjustment system 1 corresponds to the cumulative height of the fork of the castor and castor 10.

## Claims

1. A roller-based height adjustment system (1) for levelling and repositioning an instrument, which is to be relocated at a desired vertical elevation with respect to a ground reference, comprising:
a frame (2) - for supporting the instrument;
the wheel assembly (3) that is mounted to the frame, wherein the wheel assembly comprises:
a rotary shaft (5) with threaded end portions (6A, 6B) and that is mounted to the frame (2),
lead screw nuts (7A, 7B) mounted to the threaded end portions of the rotary shaft (5), such that the rotary motion of the rotary shaft (5) is converted to a linear back and forth motion of the lead screw nuts (7A, 7B),
swing levers (8) mounted to the lead screw nuts (7A, 7B) at their lower end portions, such that the back and forth motion of the lead screw nuts (7A, 7B) pivots the swing levers (8),
rods (9) are mounted to the upper part of the swing levers (8), such that the pivotal movement of the swing levers (8) rotates the rods (9) clockwise and counterclockwise,
wheels (10) are coupled to the rods (9), such that the rotary motion of the rods (9) results in the linear up and down motion of all of the wheels (10).

2. The system according to claim 1, wherein the desired vertical elevation is in the range from 1 mm to 100 mm, specifically in the range from 1 mm to 50 mm, and more specifically in the range from 1 mm to 26 mm.

3. The system according to claims 1 and 2, wherein the wheel assembly (3) is mounted to the frame (2) via cantilevers (4).

4. The system according to claim 1 to 3, wherein the mounted wheels (10) are mounted castors.

5. The system according to claim 1 to 4, wherein the rotary shaft (5) is rotatably mounted at the central part and at its end portions to the bottom of the said frame via slide bushings (12).

6. The system according to claims 1 to 5, wherein the rotary shaft (5) is a drive shaft.

7. The system according to claims 1 to 6, wherein the end portion of the rotary shaft further comprise
an exposed socket (14) for insertion of a complementary actuator (15) to drive the rotation of the said rotary shaft (5).

8. The system according to claims 1 to 7, wherein the components of the said wheel assembly (3) are mounted with a mirror symmetry, such that
the plane of symmetry is perpendicular to the rotary shaft (5) and centred at the middle of the rotary shaft (5),
the threads of the said rotary shaft are left-hand thread (6A) and right-hand thread (6B),
the mounted lead screw nuts are, accordingly, left-hand nut (7A) and right-hand nut (7B), the two swing levers (8) are mounted such that they pivot in opposite directions,
the two rods (9) are rotating in opposite directions and
the four wheels (10) are simultaneously moved in the linear up and down motion by the rotary motion of the rods (9).

9. The system according to claims 1 to 8, wherein the rods (9) are square shaped rods.

10. The system according to claims 1 to 9, wherein cams (11) are mounted at the end portions of the rods (9) and the wheels (10) are coupled to the cams (11) via a wheel stem (13 - Fig 2A), such that a sliding contact is created.

11. The system according to claims 1 to 10, wherein cylindrical gears are mounted at the end portions of the rods (9) and the wheels (10) are coupled to the cylindrical gears via a toothed bar, such that the cylindrical gear meshes with the toothed bar of the wheel stem.

12. The system according to claim 1 to 11, wherein the threaded end portions (6 A, B) of the rotary shaft (5) are self-locking threads.

13. The system according to claims 1 to 12, wherein the frame (2) is connected to at least one other object with a fixing device.

14. The system according to claim 13, wherein the object is an instrument.

15. The system according to claims 1 to 14, wherein the roller-based height adjustment system (1) according to any of the preceding claims referring to a roller-based height adjustment system is used for levelling and repositioning at least one instrument in a laboratory setting.
